# EUROPEAN PATENT SPECIFICATION

(11) **EP 2 768 176 B1**
(45) Date of publication and mention of the grant of the patent: **15.07.2020**
(21) Application number: 13179036.2
(22) Date of filing: 02.08.2013
(51) Int. Cl.: H04L 5/00, H04L 25/02

(54) **Orthogonal frequency division multiplexing (ofdm) channel estimation to improve the smoothing process**
Kanalschätzung mit orthogonalem Frequenzmultiplexing (OFDM) zu Verbesserung des Glättungsverfahrens
Estimation du canal de multiplexage par répartition orthogonale de la fréquence (ofdm) pour améliorer le processus de lissage

(30) Priority: 17.01.2013 CN 201310017896; 28.04.2013 WO PCT/CN2013/074999
(43) Date of publication of application: 20.08.2014
(73) Proprietor: Spreadtrum Communications (Shanghai) Co., Ltd., Shanghai 201203 (CN)
(72) Inventor: Shen, Xuqiang, Pudong New Area Shanghai 201203 (CN); Cao, Qiang, Pudong New Area Shanghai 201203 (CN); Dong, Xiaojian, Pudong New Area Shanghai 201203 (CN)
(74) Representative: Loyer & Abello

(56) References cited:
- CN-A- 1 708 142
- CN-A- 101 383 793
- CN-B- 101 325 568
- US-A1- 2005 105 461
- US-A1- 2010 296 438
- US-B1- 6 768 714
- DO HYUN PARK ET AL: "Channel estimation with pilot signal design for terrestrial UDTV using MISO technology", CONSUMER ELECTRONICS (ICCE), 2012 IEEE INTERNATIONAL CONFERENCE ON, IEEE, 13 January 2012 (2012-01-13), pages 207-208, XP032124855, DOI: 10.1109/ICCE.2012.6161831 ISBN: 978-1-4577-0230-3

## Description

In existing Orthogonal Frequency Division Multiplexing (OFDM) systems, training sequences known to a receiver are generally transmitted on subcarriers of transmitted OFDM symbols, and the receiver performs channel estimation using the training sequences and equalizes data to be demodulated.

Due to the fact that general OFDM systems occupy a certain bandwidth and pilot subcarriers only exist in certain bandwidths, generally OFDM channel estimation is performed by smoothing filtering of the pilot frequencies. However, when no pilot frequency information exists outside the effective subcarriers of the OFDM during the smoothing filtering, significant distortion may occur to the edge when performing the channel estimation.

Further, in an Long Term Evolution (LTE) systems, a base station can transmit a dedicated channel to a user equipment (UE) by beam forming of a smart antenna, but the dedicated channel only occupies certain subbands, and the subbands can transmit dedicated pilot frequencies to the UE. Due to the low bandwidth of the subbands, the subcarriers dedicated to UE are very limited. Therefore, channel estimation generally has a significant edge effect.

With the above described methods, certain edge errors occur. In this situation, if a small amount of subcarriers are allocated to the receiver and located at the edge of pilot frequencies, receptivity declines greatly.

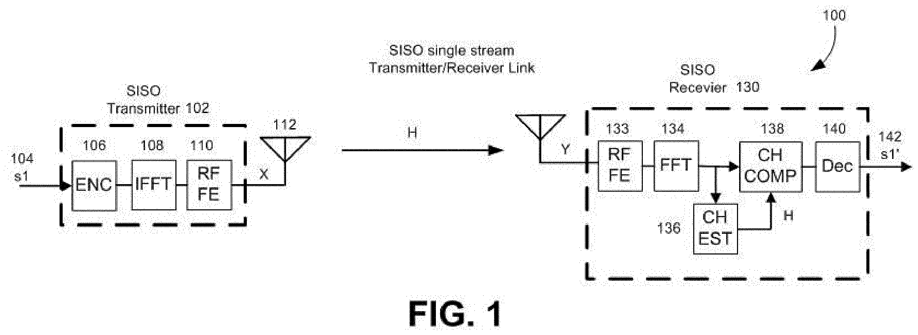

Furthermore, in an OFDM receiver, channel smoothing is performed on the estimated channel in order to reduce the effects of noise on the estimated channel, thereby improving the system packet error performance. **FIG. 1** illustrates a single stream OFDM transmitter 102 accepting an input stream s1 104 to a baseband encoder 106 which encoded stream is provided to an inverse fast Fourier transform (IFFT) 108 to produce a plurality of baseband subcarriers such as 1 through 1024 or 1 through 512, and the subcarriers are modulated to a carrier frequency for coupling to an antenna 112 as transmitted signal X. The transmitted signal X is coupled through a channel with a frequency dependent characteristic H to receive antenna 132 of receiver 130 to form received signal Y=HX. The receiver 130 receives signal Y, which is baseband converted using RF Front End 133 and applied to FFT 134 to channel compensator 138 and to decoder 140 which generates the received stream S1'. Channel estimator 136 estimates the channel characteristic H during a long preamble interval, and the channel characteristic H is applied to channel compensator 138.

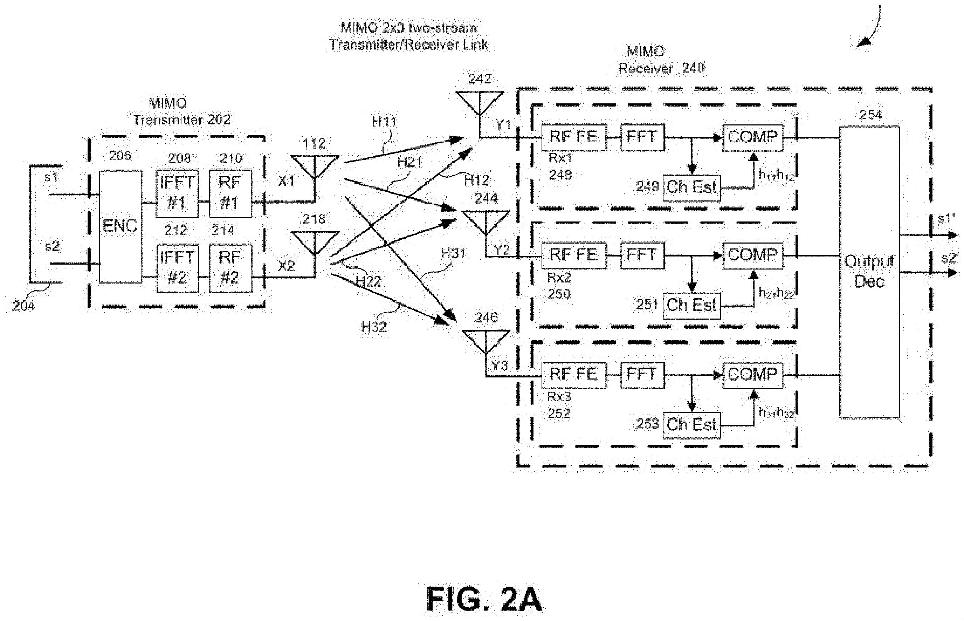

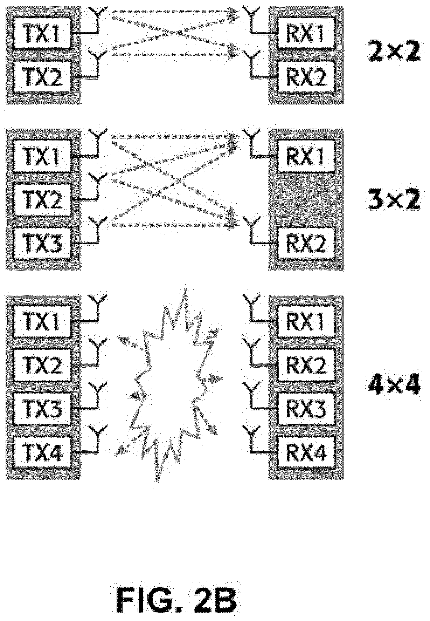

**FIG. 2** illustrates a Multiple Input Multiple Output (MIMO) receiver 240 operative on two transmit streams s1 and s2 204 encoded 206 and provided to first stream IFFT 208 which generates baseband subcarriers, which are provided to RF modulator and amplifier 210 and coupled as XI to antenna 216. Second stream IFFT 212 and RF modulator and amplifier 214 similarly generate subcarriers which are upconverted and coupled to antenna 218 as X2. Receiver 240 has three antennas 242, 244, 246, which couple to receivers 248, 250, 252 and to output decoder 254 which forms decoded streams s1' and s2'. Each receiver 248, 250, 252 performs the receive functions as described for FIG. 1, however the channel estimation function 249, 251, 253 for each receiver uses the long preamble part of the packet to characterize the channel from each transmit antenna 216, 218 to each receive antenna 242, 244, 246. For example, receiver 248 must characterize and compensate the channel h11 from 216 to 242 as well as channel h12 from 218 to 242. Each channel characteristic h11 and h22 is a linear array containing real and imaginary components for each subcarrier, typically 1 through 1024. The channel estimator 249 therefore contains h11 and h12, estimator 251 contains h21 and h22, and channel estimator 253 contains h31 and h32. The 2.times.3 MIMO case of FIG. 2 shows the case where the number of remote transmitters Nt=2 and the number of local antennas and receivers Nr=3. For a MIMO receiver where the number of remote transmitters is Nt and the number of local antennas and receivers is Nr, the Nt^{∗}Nr channels have a frequency response which may be smoothed over a range of subcarrier frequencies using a finite impulse response (FIR) filter for I and Q channels. Such a channel smoothing filter would require a total of 2^{∗}Nt^{∗}Nr filters. For a 13 tap FIR filter, each tap would have an associated multiplier, so such an implementation would require 13 complex multipliers for each filter, or 26^{∗}Nt^{∗}Nr multipliers total at each receiver station.

Accordingly, edge distortion of subcarriers in channel estimation caused by edge effect needs to be remedied. Thus, a method for mitigating edge distortion of subcarriers in channel estimation caused by edge effect is needed.

A method of processing communication signals, the method comprising: selecting a plurality of pilot subcarriers from effective subcarriers received from a subband; descrambling the plurality of pilot subcarriers to obtain phases of parts or all of the pilot subcarriers; based on the phase, obtaining phase differences between two adjacent pilot subcarriers in the subband by calculation; based on the phase differences, obtaining at least one fake pilot subcarriers by phase rotation; adding the at least one fake pilot subcarrier to a frequency out of the subband; smoothing the at least one fake pilot subcarrier and the descrambled pilot subcarriers to obtain a channel estimation result. According to one embodiment of the present invention, wherein amplitude of the at least one fake pilot subcarrier is an average of amplitudes of the descrambled pilot subcarriers close to the fake pilot subcarrier; or amplitude of the at least one fake pilot subcarrier is an average of amplitudes of all the descrabled pilot subcarriers. According to one embodiment of the present invention, wherein amplitude of the at least one fake pilot subcarrier is set as amplitude of a pilot subcarrier selected from the descrambled pilot subcarriers. According to one embodiment of the present invention, wherein the at least one fake pilot subcarrier are added at both two sides of the subband. According to one embodiment of the present invention, wherein the step of adding at least one fake pilot subcarrier to a frequency out of the subband by phase rotation comprises the substeps as follows: for each of the at least one fake pilot subcarrier, selecting one as a standard subcarrier from the descrambled pilot subcarriers; obtaining and setting number of subcarriers between the standard subcarrier and the at least one fake subcarrier as an interval subcarriers number; multiplying the interval subcarriers number by the phase differences to obtain a total phase difference; adding the total phase difference to phase of the standard subcarrier to obtain phase of the at least one fake pilot subcarrier. According to one embodiment of the present invention, wherein the step of adding at least one fake pilot subcarrier to a frequency out of the subband by phase rotation comprises the substeps as follows: obtaining phases of parts or all of the pilot subcarriers which have been descrambled and are close to the at least one fake pilot subcarrier by calculation; obtaining an averagely phase difference between the parts or all of the pilot sucarriers which have been descrambled and are close to the at least one fake pilot subcarrier by calculation; uniformizing the averagely phase difference to one of the subcarriers; averaging the uniformized averagely phase difference again to obtain phase difference between two adjacent pilot subcarriers.

A further understanding of the nature and advantages of the present invention may be realized by reference to the remaining portions of the specification and the drawings, wherein like reference numerals are used throughout the several drawings to refer to similar components. In some instances, a sub-label is associated with a reference numeral to denote one of multiple similar components. When reference is made to a reference numeral without specification to an existing sub-label, it is intended to refer to all such multiple similar components.
**FIG. 1** illustrates a single stream OFDM transmitter.
**FIG. 2A** illustrates a Multiple Input Multiple Output (MIMO) receiver.
**FIG. 2B** is a simplified diagram illustrating various types of MIMO configuration.
**FIG. 3** illustrates the frequency domain subcarriers of Symbol of Cell-RS pilot frequency in an LTE system, according to another embodiment of the invention.
**FIG. 4** illustrates a method for implementing the frequency domain subcarriers of Symbol of Cell-RS pilot frequency in an LTE system, according to another embodiment of the invention.
**FIG. 5** illustrates a block diagram of an exemplary computer hardware system that may be used to implement various embodiments.

In the following description, for the purposes of explanation, numerous specific details are set forth in order to provide a thorough understanding of various embodiments of the present invention. It will be apparent, however, to one skilled in the art that embodiments of the present invention may be practiced without some of these specific details. In other instances, well-known structures and devices are shown in block diagram form.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the scope of the invention as set forth in the appended claims.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Aspects of the present invention relate to by calculating phase differences among the subcarriers and average value of edge pilot frequencies, the pilot frequency edge is patched with virtual pilot frequency by phase rotation, then smoothing operation is made to obtain the channel estimation result. Further, by more accurate edge patch operations, the subcarriers on the channel estimation band edge (or edge RB of PDSCH allocated by beam forming) can produce a good channel estimation results. Further aspects of the present invention relate to creating artificial waveform edges of a sine wave in the frequency domain to perform smoothing on the sine wave, and then restoring the waveform back. For example, "fake" waveforms are constructed in frequency domain to be used for smoothing actual waveforms.

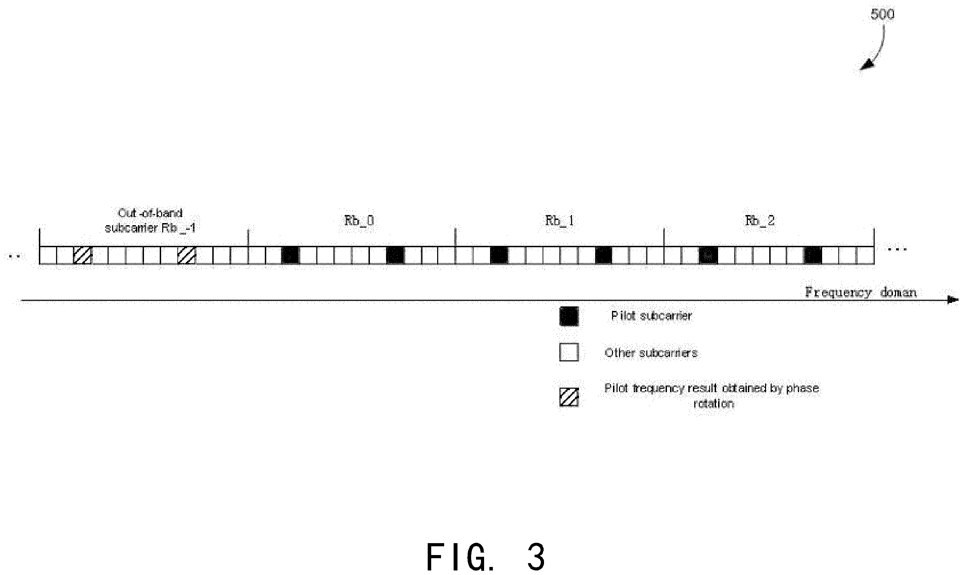

**FIG. 3** illustrates the frequency domain subcarriers of Symbol of Cell-RS pilot frequency in an LTE system, according to another embodiment of the invention. In one embodiment, for a receiver, the effective subcarriers are between Rb_0 and Rb_N -1, and the data is demodulated within this band. For channel estimation, pilot frequencies are selected from the effective subcarriers, descrambled, and smoothed. The smoothing results are channel estimation results, and all subcarriers can obtain channel estimation results after smoothing.

Based on the front subbands or the rear subbands, pilot frequency data is set as, i=0, 1,2...2^{∗}N-1 to calculate their average valve; or set as, m=0, 1,2,M-1, where M is pilot frequency number in frequency band used during edge patch. Calculating the phase of the subcarrier and is setas, m=0, 1,2, M-1, and calculating an average phase difference and normalize it to one subcarrier, m=0,1,M-2. The average of all phase differences and set as the result AvePhaseDif. Then, based on Ave and AvePhaseDif, as well as interpolating pilot frequency position and the pilot frequency position corresponding to Ave, the distance among the subcarriers so as to get the phase to be rotated can be obtained.

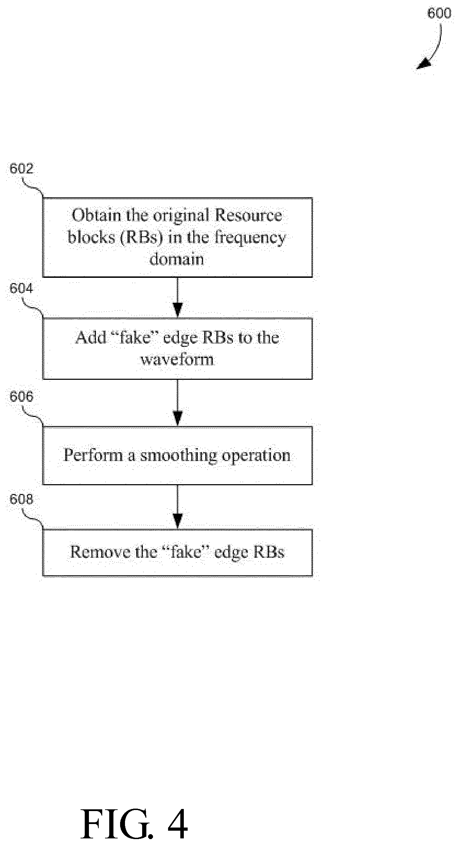

The Ave is phase rotated to obtain extrapolated pilot frequency, and the extrapolated pilot frequency is smoothed to obtain the channel estimation results. Turning now to **FIG. 4**, which illustrates a method 600 for obtaining the frequency domain subcarriers of Symbol of Cell-RS pilot frequency in an LTE system, according to another embodiment of the invention. At process block 602, the original Resource blocks (RBs) in the frequency domain are obtained. More specifically, the phases of subcarriers are determined, and the phase information and the corresponding amplitude therefore are normalized accordingly to determine the average.

At process block 604, "fake" edge RBs (can be from the beginning, the end, or in the middle gap) are added to the waveform. For example, to get RB(-1), get average phase/amplitude of RBO, RBI, and RB2 (or RBm), to guess a waveform so that RB(-1) is continuous. Further, other methods to get "smooth" fake RB include copying over from RB_0 for RB_(-1). Then, a smoothing operation is perform (process block 606). In one embodiment, the smoothing operation includes applying a Weiner filter, a discrete Fourier Transform, etc. Then, at process block 608, the "fake" edge RBs are removed. For example, the amount of phase rotation needed for smoothing is calculated using Ave and AvePhaseDif values, and the phase rotation is applied to the corresponding subcarrier signal. For example, the phase rotation and adjustment is illustrated in Figure 4. The right side of the waveform RB_1 is adjusted to that it connects to the left side of the waveform RB_0. For example, if RB_0 waveform starts at pi/4 from the left, RB_(-1) would terminate at pi/4 to connect to the RB_0 waveform. Similary, if RB_N-1 terminates at 3pi/4, RB_N waveform would be adjusted (e.g., rotated) to start at 3pi/4 to connect with the RB_N-1 waveform. Also, referring back to Figure 4, the average of amplifitude of the existing waveforms (i.e., RB_0 to RB_N-1). This average is used when generating "fake" waveforms RB_-2, RB_-1, RB_N, and RB_N+1. For example, as shown in Figure 4, the amplitude of the "fake" and actual waveforms are substantially the same.

Alternative to the edge patch of the subcarriers being in the first part of the frequency domain; in other situations the edge patch can be in the middle or end of the frequency band. In this situation the same principle can be applied. For the subcarriers on external patching edge, the average value may not be used, but instead, one pilot frequency can be used to patch out-of-band pilot frequencies by a phase rotation. Further, the calculation of the phase difference can be simplified. Phase difference between two pilot frequencies can be initially calculated, phase to be rotated can be calculated based on space between the pilot frequencies, and then corresponding phases are rotated to obtain the extrapolated pilot frequency.

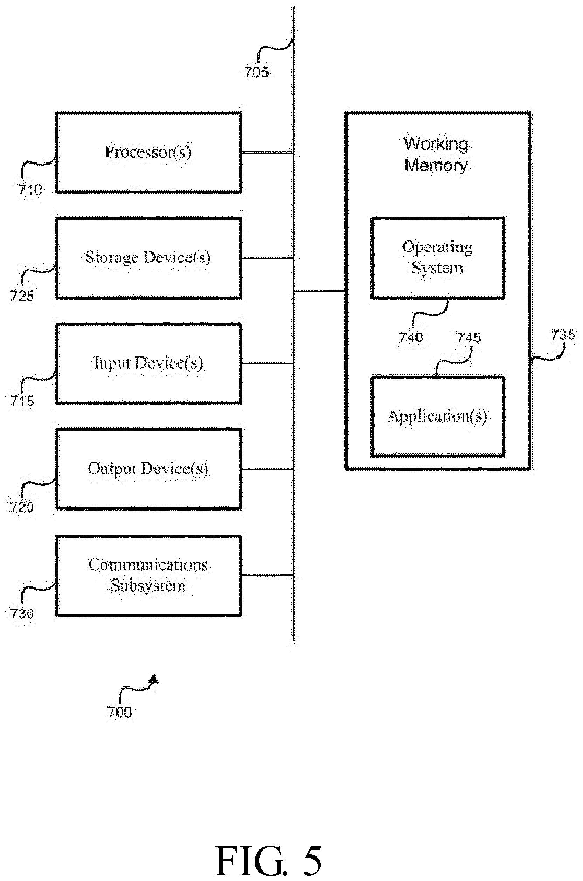

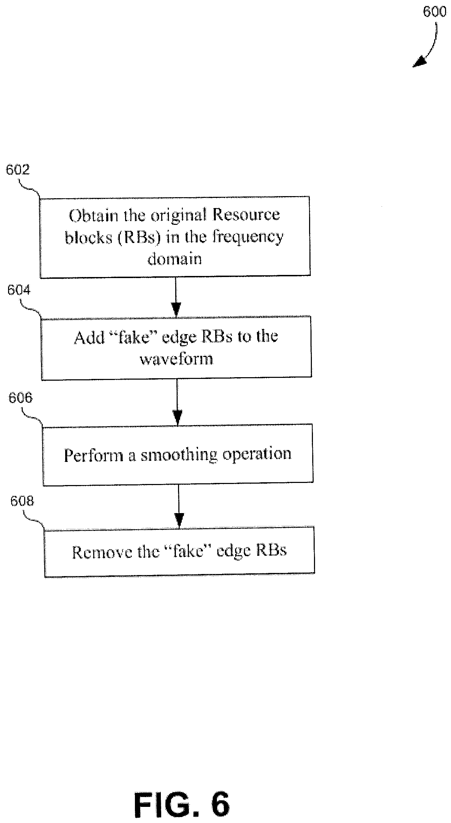

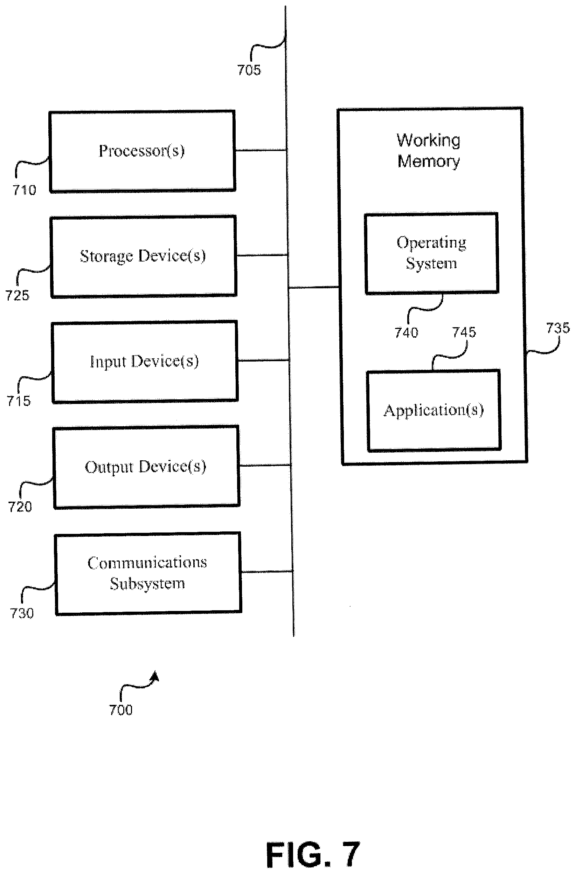

**FIG. 5** illustrates a block diagram of an exemplary computer system 700 that may be used to implement various embodiments. Some embodiments may employ a computer system (such as the computer system 700) to perform methods in accordance with various embodiments of the invention. The computer system may be implemented using various circuits, microchips, and connections within a mobile device. According to a set of embodiments, some or all of the procedures of such methods are performed by the computer system 700 in response to processor 710 executing one or more sequences of one or more instructions (which might be incorporated into the operating system 740 and/or other code, such as an application program 745) contained in the working memory 735. Such instructions may be read into the working memory 735 from another computer-readable medium, such as one or more of the storage device(s) 725. Merely by way of example, execution of the sequences of instructions contained in the working memory 735 might cause the processor(s) 710 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 700, various computer-readable media might be involved in providing instructions/code to processor(s) 710 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 725. Volatile media include, without limitation, dynamic memory, such as the working memory 735.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 710 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 700.

The communications subsystem 730 (and/or components thereof) generally will receive signals, and the bus 705 then might carry the signals (and/or the data, instructions, etc. carried by the signals) to the working memory 735, from which the processor(s) 710 retrieves and executes the instructions. The instructions received by the working memory 735 may optionally be stored on a non-transitory storage device 725 either before or after execution by the processor(s) 710.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the scope of the disclosure.

Also, configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, may be used without departing from the scope of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

## Claims

1. A method of processing communication signals, the method comprising:
selecting a plurality of pilot subcarriers from effective subcarriers received from a subband;
descrambling the plurality of pilot subcarriers to obtain phases of parts or all of the pilot subcarriers;
based on the phase, obtaining phase differences between two adjacent pilot subcarriers in the subband by calculation;
based on the phase differences, obtaining at least one fake pilot subcarrier by phase rotation; adding the at least one fake pilot subcarrier to a frequency out of the subband;
smoothing the at least one fake pilot subcarrier and the descrambled pilot subcarriers to obtain a channel estimation result,
wherein the step of adding at least one fake pilot subcarrier to a frequency out of the subband by phase rotation comprises the substeps as follows:
obtaining phases of parts or all of the pilot subcarriers which have been descrambled and are close to the at least one fake pilot subcarrier by calculation;
obtaining an averagely phase difference between the parts or all of the pilot sucarriers which have been descrambled and are close to the at least one fake pilot subcarrier by calculation; normalizing the averagely phase difference to one of the subcarriers;
averaging the normalized averagely phase difference again to obtain phase difference between two adjacent pilot subcarriers.

2. The method of Claim 1, wherein amplitude of the at least one fake pilot subcarrier is an average of amplitudes of the descrambled pilot subcarriers close to the fake pilot subcarrier; or amplitude of the at least one fake pilot subcarrier is an average of amplitudes of all the descrabled pilot subcarriers.

3. The method of Claim 1, wherein amplitude of the at least one fake pilot subcarrier is set as amplitude of a pilot subcarrier selected from the descrambled pilot subcarriers.

4. The method of Claim 1, wherein the at least one fake pilot subcarrier are added at both two sides of the subband.

5. A computer-readable medium for processing communication signals, the computer-readable medium having sets of instruction stored thereon which, when executed by a computer cause the computer to:
selecting a plurality of pilot subcarriers from effective subcarriers received from a subband;
descrambling the plurality of pilot subcarriers to obtain phases of parts or all of the pilot subcarriers;
based on the phase, obtaining phase differences between two adjacent pilot subcarriers in the subband by calculation;
based on the phase differences, obtaining at least one fake pilot subcarrier by phase rotation; adding the at least one fake pilot subcarrier to a frequency out of the subband;
smoothing the at least one fake pilot subcarrier and the descrambled pilot subcarriers to obtain a channel estimation result,
wherein the step of adding at least one fake pilot subcarrier to a frequency out of the subband by phase rotation comprises the substeps as follows:
obtaining phases of parts or all of the pilot subcarriers which have been descrambled and are close to the at least one fake pilot subcarrier by calculation;
obtaining an averagely phase difference between the parts or all of the pilot sucarriers which have been descrambled and are close to the at least one fake pilot subcarrier by calculation; normalizing the averagely phase difference to one of the subcarriers;
averaging the normalized averagely phase difference again to obtain phase difference between two adjacent pilot subcarriers.

6. The medium of Claim 5, wherein amplitude of the at least one fake pilot subcarrier is an average of amplitudes of the descrambled pilot subcarriers close to the fake pilot subcarrier; or amplitude of the at least one fake pilot subcarrier is an average of amplitudes of all the descrabled pilot subcarriers.

7. The medium of Claim 5, wherein amplitude of the at least one fake pilot subcarrier is set as amplitude of a pilot subcarrier selected from the descrambled pilot subcarriers.

8. The medium of Claim 5, wherein the at least one fake pilot subcarrier is added at both two sides of the subband.

## Patentansprüche

1. Verfahren zur Verarbeitung von Kommunikationssignalen, umfassend:
Auswahl einer Vielzahl von Pilotunterträgern aus effektiven Unterträgern, die von einem Teilband erhalten wurden;
Entschlüsselung der Vielzahl von Pilotunterträgern, um Phasen von Teilen der oder allen Pilotunterträgern zu erhalten;
Basierend auf der Phase Erhalten von Phasendifferenzen zwischen zwei benachbarten Pilotunterträgern im Unterband durch Berechnung;
Basierend auf den Phasendifferenzen Erhalten von mindestens einem gefälschten Pilotunterträger durch Phasendrehung;
Hinzufügen des mindestens einen gefälschten Pilotunterträgers zu einer Frequenz aus dem Teilband heraus;
Glättung des mindestens einen gefälschten Pilotunterträgers und der entschlüsselten Pilotunterträger, um ein Kanalschätzungsergebnis zu erhalten,
wobei der Schritt des Hinzufügens mindestens eines gefälschten Pilotunterträgers zu einer Frequenz außerhalb des Unterbandes durch Phasendrehung die folgenden Unterschritte umfasst:
Erhalten von Phasen von Teilen der oder allen Pilotunterträgern, die entschlüsselt worden sind und rechnerisch nahe an dem mindestens einen gefälschten Pilotunterträger liegen;
Erhalten einer mittleren Phasendifferenz zwischen den Teilen der oder allen Pilotunterträgern, die entschlüsselt wurden und dem mindestens einen gefälschten Pilotunterträger rechnerisch nahe kommen; Normalisieren der mittleren Phasendifferenz auf einen der Unterträger;
erneute Mittelwertbildung der normierten gemittelten Phasendifferenz, um die Phasendifferenz zwischen zwei benachbarten Pilotunterträgern zu erhalten.

2. Verfahren nach Anspruch 1, wobei die Amplitude des mindestens einen gefälschten Pilotunterträgers ein Mittelwert der Amplituden der entschlüsselten Pilotunterträger in der Nähe des gefälschten Pilotunterträgers ist; oder die Amplitude des mindestens einen gefälschten Pilotunterträgers ein Mittelwert der Amplituden aller entschlüsselten Pilotunterträger ist.

3. Verfahren nach Anspruch 1, wobei die Amplitude des mindestens einen gefälschten Pilotunterträgers als Amplitude eines Pilotunterträgers eingestellt wird, der aus den entschlüsselten Pilotunterträgern ausgewählt wird.

4. Verfahren nach Anspruch 1, bei dem der mindestens eine gefälschte Pilotunterträger an beiden Seiten des Unterbandes hinzugefügt wird.

5. Computerlesbares Medium zur Verarbeitung von Kommunikationssignalen, wobei auf dem computerlesbaren Medium Befehlssätze gespeichert sind, die bei der Ausführung durch einen Computer den Computer veranlassen zu:
Auswahl einer Vielzahl von Pilotunterträgern aus effektiven Unterträgern, die von einem Teilband erhalten wurden;
Entschlüsselung der Vielzahl von Pilotunterträgern, um Phasen von Teilen der oder allen Pilotunterträgern zu erhalten;
Basierend auf der Phase Erhalten von Phasendifferenzen zwischen zwei benachbarten Pilotunterträgern im Unterband durch Berechnung;
Basierend auf den Phasendifferenzen Erhalten von mindestens einem gefälschten Pilotunterträger durch Phasendrehung;
Hinzufügen des mindestens einen gefälschten Pilotunterträgers zu einer Frequenz aus dem Teilband heraus;
Glättung des mindestens einen gefälschten Pilotunterträgers und der entschlüsselten Pilotunterträger, um ein Kanalschätzungsergebnis zu erhalten,
wobei der Schritt des Hinzufügens mindestens eines gefälschten Pilotunterträgers zu einer Frequenz außerhalb des Unterbandes durch Phasendrehung die folgenden Unterschritte umfasst:
Erhalten von Phasen von Teilen der oder von allen Pilotunterträgern, die entschlüsselt wurden und rechnerisch nahe an dem mindestens einen gefälschten Pilotunterträger liegen;
Erhalten einer mittleren Phasendifferenz zwischen den Teilen der oder allen Pilotunterträgern, die entschlüsselt wurden und dem mindestens einen gefälschten Pilotunterträger rechnerisch nahe kommen; Normalisieren der mittleren Phasendifferenz auf einen der Unterträger;
Erneute Mittelwertbildung der normierten gemittelten Phasendifferenz, um die Phasendifferenz zwischen zwei benachbarten Pilotunterträgern zu erhalten.

6. Medium nach Anspruch 5, wobei die Amplitude des mindestens einen gefälschten Pilotunterträgers ein Mittelwert der Amplituden der entschlüsselten Pilotunterträger in der Nähe des gefälschten Pilotunterträgers ist; oder die Amplitude des mindestens einen gefälschten Pilotunterträgers ein Mittelwert der Amplituden aller entschlüsselten Pilotunterträger ist.

7. Medium nach Anspruch 5, wobei die Amplitude des mindestens einen gefälschten Pilotunterträgers als Amplitude eines Pilotunterträgers eingestellt wird, der aus den entschlüsselten Pilotunterträgern ausgewählt wird.

8. Medium nach Anspruch 5, bei dem der mindestens eine gefälschte Pilotunterträger an beiden Seiten des Unterbandes hinzugefügt wird.

## Revendications

1. Procédé de traitement de signaux de communication, le procédé comprenant :
la sélection d'une pluralité de sous-porteuses pilotes parmi des sous-porteuses effectives reçues depuis une sous-bande ;
le désembrouillage de la pluralité de sous-porteuses pilotes afin d'obtenir des phases de parties ou de la totalité des sous-porteuses pilotes ;
sur la base de la phase, l'obtention de différences de phase entre deux sous-porteuses pilotes adjacentes dans la sous-bande par calcul ;
sur la base des différences de phase, l'obtention d'au moins une sous-porteuse pilote fausse par rotation de phase ; l'ajout de l'au moins une sous-porteuse pilote fausse à une fréquence en dehors de la sous-bande ;
le lissage de l'au moins une sous-porteuse pilote fausse et des sous-porteuses pilotes désembrouillées pour obtenir un résultat d'estimation de canal,
dans lequel l'étape d'ajout d'au moins une sous-porteuse pilote fausse à une fréquence en dehors de la sous-bande par rotation de phase comprend les sous-étapes suivantes :
l'obtention de phases de parties ou de la totalité des sous-porteuses pilotes qui ont été désembrouillées et sont proches de l'au moins une sous-porteuse pilote fausse par calcul ;
l'obtention d'une différence de phase en moyenne entre les parties ou la totalité des sous-porteuses pilotes qui ont été désembrouillées et sont proches de l'au moins une sous-porteuse pilote fausse par calcul ; la normalisation de la différence de phase en moyenne sur l'une des sous-porteuses ;
la moyenne de la différence de phase en moyenne normalisée à nouveau pour obtenir une différence de phase entre deux sous-porteuses pilotes adjacentes.

2. Procédé selon la revendication 1, dans lequel l'amplitude de l'au moins une sous-porteuse pilote fausse est une moyenne d'amplitudes des sous-porteuses pilotes désembrouillées proches de la sous-porteuse pilote fausse ; ou l'amplitude de l'au moins une sous-porteuse pilote fausse est une moyenne d'amplitudes de toutes les sous-porteuses pilotes désembrouillées.

3. Procédé selon la revendication 1, dans lequel l'amplitude de l'au moins une sous-porteuse pilote fausse est définie en tant qu'amplitude d'une sous-porteuse pilote sélectionnée parmi les sous-porteuses pilotes désembrouillées.

4. Procédé selon la revendication 1, dans lequel l'au moins une sous-porteuse pilote fausse est ajoutée au niveau des deux côtés de la sous-bande.

5. Support lisible par ordinateur pour traiter des signaux de communication, le support lisible par ordinateur comportant des ensembles d'instructions stockés sur celui-ci qui, lorsqu'ils sont exécutés par un ordinateur amènent l'ordinateur à :
sélectionner une pluralité de sous-porteuses pilotes parmi des sous-porteuses effectives reçues depuis une sous-bande ;
désembrouiller la pluralité de sous-porteuses pilotes afin d'obtenir des phases de parties ou de la totalité des sous-porteuses pilotes ;
sur la base de la phase, obtenir des différences de phase entre deux sous-porteuses pilotes adjacentes dans la sous-bande par calcul ;
sur la base des différences de phase, obtenir au moins une sous-porteuse pilote fausse par rotation de phase ; ajouter l'au moins une sous-porteuse pilote fausse à une fréquence en dehors de la sous-bande ;
lisser l'au moins une sous-porteuse pilote fausse et les sous-porteuses pilotes désembrouillées pour obtenir un résultat d'estimation de canal,
dans lequel l'étape d'ajout d'au moins une sous-porteuse pilote fausse à une fréquence en dehors de la sous-bande par rotation de phase comprend les sous-étapes suivantes :
l'obtention de phases de parties ou de la totalité des sous-porteuses pilotes qui ont été désembrouillées et sont proches de l'au moins une sous-porteuse pilote fausse par calcul ;
l'obtention d'une différence de phase en moyenne entre les parties ou la totalité des sous-porteuses pilotes qui ont été désembrouillées et sont proches de l'au moins une sous-porteuse pilote fausse par calcul ; la normalisation de la différence de phase en moyenne sur l'une des sous-porteuses ;
la moyenne de la différence de phase en moyenne normalisée à nouveau pour obtenir une différence de phase entre deux sous-porteuses pilotes adjacentes.

6. Support selon la revendication 5, dans lequel l'amplitude de l'au moins une sous-porteuse pilote fausse est une moyenne d'amplitudes des sous-porteuses pilotes désembrouillées proches de la sous-porteuse pilote fausse ; ou l'amplitude de l'au moins une sous-porteuse pilote fausse est une moyenne d'amplitudes de toutes les sous-porteuses pilotes désembrouillées.

7. Support selon la revendication 5, dans lequel l'amplitude de l'au moins une sous-porteuse pilote fausse est définie en tant qu'amplitude d'une sous-porteuse pilote sélectionnée parmi les sous-porteuses pilotes désembrouillées.

8. Support selon la revendication 5, dans lequel l'au moins une sous-porteuse pilote fausse est ajoutée au niveau des deux côtés de la sous-bande.
